# EUROPÄISCHE PATENTSCHRIFT

(11) **EP 3 969 342 B1**
(45) Veröffentlichungstag und Bekanntmachung des Hinweises auf die Patenterteilung: **10.07.2024**
(21) Anmeldenummer: 20725506.8
(22) Anmeldetag: 11.05.2020
(51) Int. Cl.: B60W 30/16, B60W 50/14, B60W 50/10

(54) **FAHRERASSISTENZSYSTEM FÜR EIN KRAFTFAHRZEUG UND KRAFTFAHRZEUG**
DRIVER ASSISTANCE SYSTEM FOR A MOTOR VEHICLE, AND MOTOR VEHICLE
SYSTÈME D'AIDE À LA CONDUITE POUR UN VÉHICULE À MOTEUR ET VÉHICULE À MOTEUR

(30) Priorität: 13.05.2019 DE 102019206897
(43) Veröffentlichungstag der Anmeldung: 23.03.2022
(73) Patentinhaber: Audi AG, 85045 Ingolstadt (DE)
(72) Erfinder: LIMBACHER, Reimund, 85055 Ingolstadt (DE)
(86) Internationale Anmeldenummer: PCT/EP2020/063011
(87) Internationale Veröffentlichungsnummer: WO 2020/229390

(56) Entgegenhaltungen:
- DE-A1- 102007 031 543
- DE-A1- 102012 007 197
- US-A1- 2011 276 246

## Beschreibung

Die Erfindung betrifft ein Fahrerassistenzsystem für ein Kraftfahrzeug. Des Weiteren betrifft die Erfindung ein Kraftfahrzeug mit einem solchen Fahrerassistenzsystem.

Unter dem Begriff "Fahrerassistenzsystem" werden hier und im Folgenden verschiedene Systeme eines Fahrzeugs zusammengefasst, die zur Unterstützung des Fahrers eines Kraftfahrzeugs dienen. Ein hinlänglich bekanntes System stellt dabei eine sogenannte Geschwindigkeitsregelanlage dar, die mittels eines entsprechenden Controllers dazu ausgebildet ist, das Kraftfahrzeug auf einer üblicherweise vom Fahrer eingestellten Sollgeschwindigkeit (d. h. einen Zielwert) zu halten. Ein weiterentwickeltes System nutzt zusätzlich ein Abstandsmesssystem, bspw. Radarsensoren und/oder eine Frontkamera, um vorausfahrende Fahrzeuge, die Hindernisse darstellen können, zu erkennen und bei Erreichen eines vorgegebenen Abstands (d. h. eines "Abstandszielwerts") zu dem vorausfahrenden Fahrzeug die Fahrgeschwindigkeit (in Abweichung zur Sollgeschwindigkeit) zu reduzieren und dem vorausfahrenden Fahrzeug somit zu folgen. Beschleunigt das vorausfahrende Fahrzeug erhöht das System die Geschwindigkeit des eigenen Fahrzeugs bis gegebenenfalls die eigene Sollgeschwindigkeit erreicht wird. Weitere Systeme sind bspw. Spurhaltesysteme und dergleichen.

In DE 10 2012 007 197 A1 ist ein Verfahren zur adaptiven Geschwindigkeitsregelung eines Fahrzeugs beschrieben, bei dem eine Fahrgeschwindigkeit des Fahrzeugs derart an die Geschwindigkeit eines als Zielobjekt ausgewählten vorausfahrenden Fahrzeugs angepasst wird, dass das Fahrzeug dem Zielobjekt in einem vorgebbaren Sollabstand folgt, und bei dem das Fahrzeug nach einem Zielobjektverlust auf eine vorgegebene Sollgeschwindigkeit beschleunigt wird.

In DE 10 2007 031 543 A1 ist ein Verfahren zum Vorgeben eines Sollabstands zu einem vorausfahrenden Fahrzeug bei einer Geschwindigkeitsregelung mittels eines abstandsbezogenen Geschwindigkeitsregelsystems beschrieben, das bei Freifahrt die Geschwindigkeit eines Kraftfahrzeugs auf eine vorgegebene Sollgeschwindigkeit, und bei einer Folgefahrt die Geschwindigkeit des Kraftfahrzeugs auf einen vorgegebenen Sollabstand regelt. Dabei kann der Sollabstand bei einer Folgefahrt auf ein vorausfahrendes Fahrzeug bei Betätigung des Gaspedals reduziert werden.

Aufgabe der Erfindung ist es, die Bedienung eines Fahrerassistenzsystems für den Fahrer weiter zu vereinfachen.

Diese Aufgabe wird erfindungsgemäß gelöst durch ein Fahrerassistenzsystem mit den Merkmalen des Anspruchs 1. Außerdem wird diese Aufgabe erfindungsgemäß gelöst durch ein Kraftfahrzeug mit den Merkmalen des Anspruchs 10. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Fahrerassistenzsystem ist zum Einsatz in einem (insbesondere landgestützten) Kraftfahrzeug (bspw. einem Personenkraftwagen) eingerichtet und vorgesehen (oder im bestimmungsgemäßen Einsatzzustand in einem Kraftfahrzeug eingebaut). Das Fahrerassistenzsystem weist ein Abstandsmesssystem zur Bestimmung eines Abstands zu einem vorausfahrenden Fahrzeug auf oder ist im bestimmungsgemäßen Einbauzustand im Kraftfahrzeug mittels einer zugeordneten Schnittstelle mit einem solchen Abstandsmesssystem des Kraftfahrzeugs signalübertragungstechnisch verknüpft. Das Fahrerassistenzsystem weist des Weiteren einen Controller auf, der dazu eingerichtet ist, in einem Automatikmodus das Kraftfahrzeug auf einem vorgegebenen Zielwert einer Fahrgeschwindigkeit zu halten. Das heißt, dass der Controller insbesondere dazu eingerichtet ist, die Fahrgeschwindigkeit des Kraftfahrzeugs auf den Zielwert zu regeln. Der Controller ist dabei außerdem dazu eingerichtet, im Automatikmodus (insbesondere während einer sogenannten Folgefahrt) einen vorgegebenen Abstandszielwert eines Abstands zu dem vorausfahrenden Fahrzeug nicht zu unterschreiten, d. h. den Abstand des Kraftfahrzeugs zu dem vorausfahrenden Fahrzeug auf den Abstandszielwert zu regeln, sofern der Zielwert der Fahrgeschwindigkeit größer ist als der Wert der Fahrgeschwindigkeit des vorausfahrenden Fahrzeugs (auch als "Abstandsregelung" bezeichnet). Zusätzlich ist der Controller dazu eingerichtet, - im Automatikmodus - situationsspezifisch in Abhängigkeit von sensorisch (d. h. mittels entsprechender Sensoren) erfassten Umgebungsmessgrößen den Abstandszielwert anzupassen, konkret einen neuen Abstandszielwert zu setzen. Der Controller ist ferner dazu eingerichtet, auf eine Eingabe eines Fahrzeuginsassen hin einen neuen nutzerspezifischen Abstandszielwert zu übernehmen. Außerdem ist der Controller dazu eingerichtet, eine aktuelle Fahrsituation sowie ein Ende der aktuellen Fahrsituation zu erkennen und während einer Folgefahrt den neuen (zumindest den nutzerspezifischen) Abstandszielwert nur für die Dauer der aktuellen Fahrsituation (d. h. temporär) als neuen Zielwert zu übernehmen.

Vorzugsweise ist der Controller dazu eingerichtet ist, den Abstandszielwert automatisch an unterschiedliche Fahrsituationen anzupassen, die aus der vorstehend genannten Umgebungsmessgröße abgeleitet werden können,, bspw. aus einer detektierten Verkehrsdichte, eingeschränkten Sichtverhältnissen (bspw. aufgrund von Nebel, Niederschlag, Lichtverhältnisse), Fahrbahnbeschaffenheit (bspw. Glattheit des Straßenbelags, Fahrbahnschäden oder dergleichen). Dazu wertet der Controller vorzugweise unterschiedliche Sensoren aus, bspw. Außenlichtsensoren, Radarsensoren, Kameras oder dergleichen. Dieses Vorgehen kann auch unter der Bezeichnung prädiktive Fahrtregelung zusammengefasst werden.

Außerdem ist der Controller auch dazu eingerichtet, bei Detektion des Endes der aktuellen Fahrsituation wieder den vor dem Wechsel auf den neuen Abstandszielwert gültigen "alten" Abstandszielwert als aktuellen Abstandszielwert zu übernehmen.

Weiter vorzugsweise ist der Controller im bestimmungsgemäßen Einbauzustand mit einem Antriebssystem des Kraftfahrzeugs verbunden oder als Teil eines Steuerprozessors des Kraftfahrzeugs ausgebildet.

Unter dem Begriff "Folgefahrt" wird hier und im Folgenden insbesondere verstanden, dass das Kraftfahrzeug von dem Controller hinter einem vorausfahrenden Fahrzeug (insbesondere in einem quasi-stationären Zustand) auf dem Abstandszielwert gehalten wird.

Durch die nur temporäre Anpassung Abstandszielwerts wird vorteilhafterweise ermöglicht, dass ein Fahrzeuginsasse, insbesondere der Fahrer den Abstandszielwert besonders einfach situativ anpassen kann, insbesondere ohne später die Anpassung rückgängig machen zu müssen. Insbesondere kann der Fahrer so auch nur verhältnismäßig kurzzeitig gültige Änderungen (insbesondere bezogen auf die gesamte Fahrtdauer oder zumindest die Fahrtdauer auf der gleichen Straße) des Abstandszielwerts vornehmen.

Vorzugsweise kommt das vorstehend beschriebene Fahrerassistenzsystem nicht nur bei einer prädiktiven Fahrtregelung sondern auch bei einem zumindest für eine Autobahnfahrt dienenden (zumindest teil-) autonomen Fahrtmodus oder auch einem (voll-) autonomen Fahrtmodus zum Einsatz.

Vorzugsweise ist der Controller des Weiteren dazu eingerichtet, als Abstand einen zeitlichen Abstand zu dem vorausfahrenden Fahrzeug zu überwachen. Dieser Abstand wird häufig auch als "Zeitlücke" oder dergleichen bezeichnet. Als nutzerunabhängige Grundeinstellung ist dabei bspw. ein Abstandswert von 1,8 Sekunden vorgegeben, der zu einem räumlichen Abstand nach der Faustregel "halber Tacho" entspricht - unabhängig von dem aktuellen Wert der Fahrgeschwindigkeit.

Das erfindungsgemäße, insbesondere landgestützte Kraftfahrzeug weist das vorstehend sowie im Folgenden weiter beschriebene Fahrerassistenzsystem auf. Somit weist das Kraftfahrzeug die im Rahmen des Fahrerassistenzsystems beschriebenen Merkmale und Vorteile gleichermaßen auf.

In einer bevorzugten Ausführung ist der Controller dazu eingerichtet, das Ende der aktuellen Fahrsituation anhand wenigstens eines Kriteriums ausgewählt aus wenigstens einem Wechsel des Straßentyps (bspw. Wechsel von Landstraße auf Autobahn oder dergleichen), Verlust (d. h. es ist kein vorausfahrendes Fahrzeug im Bereich des Abstandszielwerts mehr vorhanden) oder Wechsel des vorausfahrenden Fahrzeugs, Wechsel eines möglichen (erlaubten oder aufgrund äußerer Umstände gegebenen) Fahrgeschwindigkeitsbereichs (bspw. Einfahrt in einen oder Ausfahrt aus einem Baustellenbereich auf einer Autobahn, Veränderung der Kurvigkeit der Strecke, Wechsel von freier Fahrt zu Kolonnenfahrt, Stau oder "Stop and Go", Wechsel der Fahrbahnbeschaffenheit und/oder der Sichtverhältnisse), Ende eines Telefonats, Ende des Fahrzyklus (bspw. Abschalten der Zündung oder des Motors), Anmeldung eines anderen Fahrzeugführers (d. h. Fahrers, bspw. anhand einer Schlüsselkennnummer) zu erkennen.

Das Fahrerassistenzsystem weist vorzugsweise wenigstens einen mit dem Controller signalübertragungstechnisch verknüpften Eingabewandler auf. Der Controller ist dabei dazu eingerichtet, auf Betätigung des Eingabewandlers durch den Fahrer den neuen Abstandszielwert zu übernehmen ("zu setzen"). Die Betätigung des Eingabewandlers durch den Fahrer stellt mithin zumindest eine Form der vorstehend genannten Eingabe des Fahrers dar.

In einer zweckmäßigen Ausführung handelt es sich bei dem Eingabewandler um ein Mikrofon, das zur Aufnahme eines Sprachbefehls des Fahrers dient und somit im Kraftfahrzeug insbesondere im Bereich des Fahrersitzes, vorzugsweise im Kopfbereich des Fahrers angeordnet ist. Der Controller ist in diesem Fall vorzugsweise dazu eingerichtet, nur dann insbesondere ein Ausgangssignal des Mikrofons als eine Betätigung des Mikrofons zur Übernahme des neuen Abstandszielwerts heranzuziehen, wenn insbesondere anhand des Ausgangssignals ein entsprechender Sprachbefehl erkannt wird. Anders ausgedrückt führt der Controller eine Spracherkennung durch und fasst einen registrierten Schalleingang nur dann als Betätigung auf, wenn dabei ein - vorzugweise entsprechend hinterlegter oder mittels bspw. maschineller Lernalgorithmen erkannter - Sprachbefehl (bspw. "Fahre näher auf", "Halte mehr Abstand" oder dergleichen) detektiert wird. Bspw. ist der Controller auch dazu eingerichtet, bei vergleichsweise unspezifischen Befehlen wie z. B. "Halte mehr Abstand" eine Anpassung (hier: Vergrößerung) der zeitlichen Distanz auf den nächsten "glatten" Zehntel-Wert (also bspw. von 1,8 Sekunden auf 1,9) oder um 0,1 Sekunden, 0,25 Sekunden oder dergleichen vorzunehmen.

In einer zusätzlichen oder alternativen Ausführung handelt es sich bei dem Eingabewandler um einen Schalter oder um eine Taste zur manuellen Betätigung durch den Fahrer. Bspw. ist dieser Schalter oder diese Taste im bestimmungsgemäßen Einbauzustand an einem (Multifunktions-) Lenkrad, in dessen Nähe, bspw. in Form eines Lenkstockhebels, im Bereich eines Gang-Wahlhebels, in einem insbesondere berührungssensitiven Bildschirm oder dergleichen angeordnet.

Vorzugsweise ist der Controller dazu eingerichtet, auf eine Betätigung einer Bremse (insbesondere des Bremspedals) des Kraftfahrzeugs durch den Fahrer hin den Automatikmodus zu beenden. Diese Beendigung des Automatikmodus führt dabei jedoch nicht zwingend zum Ende der Fahrsituation, vielmehr kann - sofern innerhalb einer vorgegebenen Zeitspanne der Automatikmodus wieder aufgenommen wird - die vorgehende Fahrsituation (bspw. eine Fahrt innerhalb einer Autobahnbaustelle, ein fortdauerndes Telefonat etc.) weiterhin vorliegen, so dass der nutzerspezifische, neue Abstandszielwert weiterhin temporär als Abstandszielwert gesetzt bleibt.

In einer zweckmäßigen Ausführung ist der Controller aber dazu eingerichtet ist, während einer Folgefahrt bei Betätigung der Bremse durch den Fahrer den Automatikmodus insbesondere zumindest für einen vorgegebenen Zeitraum beizubehalten, sofern die aufgrund der Betätigung der Bremse aufgebrachte Bremskraft und/oder bewirkte Verzögerung (insbesondere ein zeitlicher Gradient der Verzögerung oder eine negative Beschleunigung) einen vorgegebenen Schwellwert nicht überschreitet. Der Controller ist also insbesondere dazu eingerichtet, (optional unter zusätzlicher Nutzung des Abstandsmessystems) anhand der Betätigung der Bremse zu erkennen, ob lediglich eine Anpassung des Zielwerts gewünscht ist oder - im Extremfall - eine Notbremsung (bspw. bei einem Ausweichmanöver, Auffahren auf ein Stauende etc.) durchgeführt wird. Eine zu starke Bremsung (bei der der vorstehend genannte Schwellwert überschritten wird) führt dabei vorzugsweise zum Abschalten des Automatikmodus seitens des Controllers. Dadurch, dass der Automatikmodus nicht grundsätzlich sofort mit Betätigung der Bremse den Fahrer beendet wird, hat dieser vorteilhafterweise eine einfache Möglichkeit, insbesondere einen größeren Abstandswert als neuen Abstandszielwert vorzugeben. Denn Bremsen ist für eine Vielzahl von Fahrern die einfachste und vom subjektiven Gefühl her gut verständliche Möglichkeit, den Abstand (und dabei auch die Fahrgeschwindigkeit) auf einen als für die aktuelle Fahrsituation passend empfundenen Wert anzupassen.

In einer optional zusätzlichen Variante zu der vorstehenden Überwachung der Bremskraft bzw. Verzögerung ist der Controller insbesondere dazu eingerichtet, als zusätzliche Bedingung heranzuziehen, dass die Bremse insbesondere mit entsprechend geringer Bremskraft betätigt bleibt. Der Controller prüft also, ob eine Art "Schleifenlassen" der Bremse bei hinreichend geringer Bremskraft stattfindet und hält in diesem Fall den Automatikmodus, vorzugsweise zumindest für den vorgegebenen Zeitraum aufrecht.

Zusätzlich oder alternativ zu diesem Schleifenlassen, ist der Controller dazu eingerichtet, insbesondere während des vorgegebenen Zeitraums trotz weiterhin aktiviertem Automatikmodus eine Beschleunigung auf den bisherigen Zielwert der Fahrgeschwindigkeit oder ein Auffahren bis zu dem Abstandszielwert zu unterlassen. Mit anderen Worten führt in diesem Fall ein "Antippen" der Bremse (insbesondere unterhalb des Bremskraft-Schwellwerts) zu einem zeitlich begrenzten Aussetzen (aber nicht einem vollständigen Deaktivieren) der Abstandsregelung und/oder der Geschwindigkeitsregelung.

In einer weiteren zweckmäßigen Ausführung ist der Controller dazu eingerichtet, während einer (insbesondere quasi-stationären) Folgefahrt bei Beschleunigung durch den Fahrzeuginsassen den Abstandszielwert zu unterschreiten. D. h. der Controller lässt in diesem Fall eine durch Betätigung des Gaspedals seitens des Fahrers "erzwungene" Unterschreitung des Abstandszielwerts zu.

In einer zweckmäßigen Weiterbildung - sowohl für den Fall, dass während der Folgefahrt trotz Betätigung der Bremse der Automatikmodus nicht abgeschaltet wird, als auch für den Fall, dass eine fahrerseitig erzwungen Unterschreitung des Abstandszielwerts zugelassen wird - ist der Controller dazu eingerichtet, bei Wegfall der Betätigung der Bremse, bei Wegfall der Beschleunigung durch den Fahrzeuginsassen oder bei Wegfall der Betätigung des Gaspedals durch den Fahrer den aktuellen Abstandswert als neuen Abstandszielwert zu übernehmen. Mit anderen Worten kann der Fahrer durch leichtes Bremsen oder Gasgeben (und anschließendem "von der Bremse-" oder "vom Gas-Gehen") einen neuen Abstandszielwert setzen. Der Controller erkennt in diesem Fall also, dass der sich aus dem Fahrerverhalten ergebende Abstandswert (insbesondere mit dem Ende des Bremsens oder dem Ende des aktiven "näher" Auffahrens) vom Fahrer als neuer Abstandszielwert gewünscht ist. Dadurch wird die Bedienung des Fahrerassistenzsystems intuitiver, für den Fahrer kaum mehr als aktive Veränderung wahrgenommen und somit vereinfacht.

In einer alternativen Variante ist der Controller - sowohl für den Fall, dass während der Folgefahrt trotz Betätigung der Bremse der Automatikmodus nicht abgeschaltet wird, als auch für den Fall, dass eine fahrerseitig erzwungen Unterschreitung des Abstandszielwerts zugelassen wird - dazu eingerichtet ist, auf Betätigung des Eingabewandlers den aktuellen Abstandswert als neuen Abstandszielwert zu übernehmen. Dadurch kann der Fahrer bspw. kurz die Bremse "antippen", das Kraftfahrzeug auf den neuen gewünschten Abstand rollen lassen und bspw. durch den Sprachbefehl "Halte diesen Abstand" als neuen, temporären Abstandszielwert vorgeben. Entsprechend ist durch aktives, fahrerseitiges Auffahren auf das vorausfahrende Fahrzeug eine Verringerung des Abstandszielwerts möglich. Alternativ zum Sprachbefehl, kann der Fahrer aber auch den Schalter oder die Taste betätigen. Der Controller ist in diesem Fall dazu eingerichtet, insbesondere nur eine "einfache" Betätigung des Schalters oder der Taste als Betätigung zum Übernehmen des aktuellen Abstandswerts als neuen Abstandszielwert aufzufassen. Insbesondere ist der Controller dazu eingerichtet, einen langen Tastendruck (bspw. länger als 1,5 Sekunden), einen Mehrfachdruck (insbesondere nach Art eines Doppelklicks) und/oder eine Kombination verschiedener Schalter bzw. Tasten zu verwerfen. Dadurch braucht der Fahrer sich, insbesondere bei Nutzung der Bremse zum Anpassen der Sollgeschwindigkeit, keine "höherwertigen" (im Sinne von komplex) Bedienschritte zur Eingabe des neuen Zielwerts zu merken. Die Änderung des Abstandszielwerts der Fahrgeschwindigkeit wird somit intuitiver.

Bleibt insbesondere bei Betätigung der Bremse bis zum Ablauf des vorgegebenen Zeitraums die Betätigung des Eingabewandlers aus, ist der Controller vorzugsweise dazu eingerichtet, den Automatikmodus zu beenden.

Weiter optional ist ein weiteres Bedienelement, bspw. ein Schalter, eine Taste, eine Art Schaltwippe, Hebel oder dergleichen vorgesehen, mittels dessen der Fahrer alternativ zum Brems- und Gaspedal die temporäre Veränderung des Abstandszielwerts vornehmen kann. Bspw. ist der Controller dazu eingerichtet, eine einfache Betätigung dieses weiteren Bedienelements für einen vorgegebenen Sprung (bspw. um 0,15 bis 0,3, insbesondere 0,25 Sekunden) auf einen höheren oder niedrigeren (entsprechend bspw. einer Betätigungsrichtung des Hebels) Abstandszielwert heranzuziehen. Alternativ ist der Controller dazu eingerichtet, den beim Ende einer für eine längere Zeitspanne (bspw. größer als 0,5 Sekunden) andauernden Betätigung dieses weiteren Bedienelements vorliegenden Wert der zeitlichen Distanz als neuen nutzerspezifischen Abstandszielwert heranzuziehen. Insbesondere beschleunigt oder verzögert der Controller während der Betätigung des weiteren Bedienelements das Kraftfahrzeug fortdauernd.

Vorzugsweise handelt es sich bei dem Abstandsmesssystem um eine (insbesondere in Fahrtrichtung blickende) Kamera, einen Radarsensor oder um eine Kombination aus diesen. Das Abstandsmessystem dient unter anderem dazu, neben Fahrzeugen auch Hindernisse im vorausliegenden Fahrweg zu erkennen. Der Controller ist in diesem Fall außerdem insbesondere dazu eingerichtet, zur Vermeidung einer Kollision mit dem erkannten Hindernis oder dem Fahrzeug von dem aktuellen Zielwert der Fahrgeschwindigkeit abzuweichen, bevorzugt im Rahmen der Abstandsregelung die Fahrgeschwindigkeit zu verringern.

In einer bevorzugten Ausführung ist der Controller dazu eingerichtet, beim Start des Automatikmodus den Abstandszielwert und/oder im Automatikmodus bei Veränderung des Abstandszielwerts, also bei selbsttätigem Setzen des neuen Abstandszielwerts sowie auch bei nutzerspezifischer Veränderung, den neuen Abstandszielwert nur für einen vorgegebenen Zeitraum, insbesondere nur für 2 bis 6 Sekunden, vorzugsweise nur für etwa 3 Sekunden, anzuzeigen.

In einer weiteren zweckmäßigen Ausführung ist der Controller dazu eingerichtet, insbesondere im Automatikmodus (sowie insbesondere außerhalb einer Folgefahrt) eine Eingabe des Fahrers, die mittels des Eingabewandlers oder optional mittels eines weiteren Eingabewandlers - insbesondere eines weiteren Schalters bzw. einer weiteren Taste - erfolgt, zur dauerhaften Veränderung des Abstandszielwerts heranzuziehen. Mithin kann der Fahrer auf diese Weise einen Abstandszielwert vorgeben, von dem aus gegebenenfalls die vorstehend beschriebene temporäre Anpassung erfolgt.

Optional ist die vorstehend beschriebene dauerhafte Anpassung des Abstandszielwerts auch in ein Einstellmenü der Fahrzeugsteuerung verlegt. Bspw. kann eine derartig vorgenommene dauerhafte Anpassung auch einem, einem spezifischen Fahrer zugeordneten Fahrzeugschlüssel zugewiesen werden.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

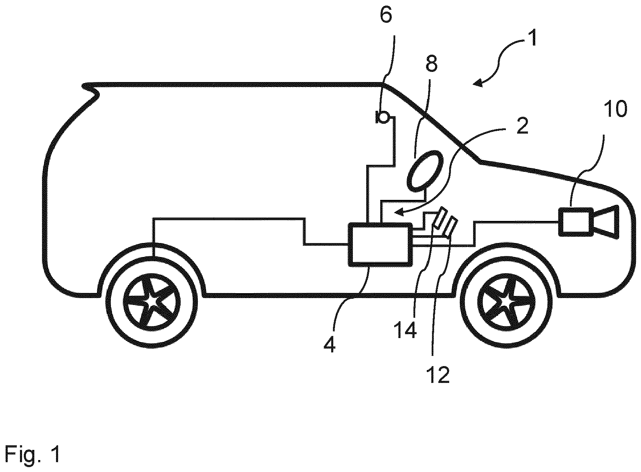

Nachfolgend wird ein Ausführungsbeispiel der Erfindung anhand einer Zeichnung näher erläutert. Darin zeigt die einzige Figur Fig. 1 in schematischer Seitenansicht ein Kraftfahrzeug mit einem Fahrerassistenzsystem.

In Fig. 1 ist ein Kraftfahrzeug 1 dargestellt. Dieses umfasst ein Fahrerassistenzsystem 2. Das Fahrerassistenzsystem 2 weist einen Controller 4 auf, der dazu eingerichtet ist, in einem Automatikmodus die Fahrgeschwindigkeit des Kraftfahrzeugs 1 auf einen Zielwert zu regeln. Das Fahrerassistenzsystem 2 weist dabei wenigstens einen, im vorliegenden Ausführungsbeispiel konkret zwei Eingabewandler auf, die mit dem Controller 4 signalübertragungstechnisch verknüpft sind. Bei diesen Eingabewandlern handelt es sich um ein (Innenraum-) Mikrofon 6 und um eine an einem Multifunktionslenkrad 8 angeordnete Taste (nicht im Detail dargestellt). Der Controller 4 ist außerdem dazu eingerichtet, auf Basis von Sensordaten, die von einem in Fahrtrichtung nach vorne gerichteten Abstandsmesssystem, hier ein Radarsystem 10 übermittelt werden, einen Abstand zu einem gegebenenfalls vorausfahrenden, langsameren Fahrzeug auf einen vorgegebenen Abstandszielwert zu regeln (eine sogenannte "Folgefahrt").

Der Controller 4 ist ferner dazu eingerichtet, auf Betätigung des Mikrofons 6 oder der Taste des Multifunktionslenkrads 8 einen neuen Abstandszielwert zu übernehmen. Dazu führt der Controller 4 eine Spracherkennung durch und wertet eine Spracheingabe nur dann als entsprechende Betätigung, wenn bspw. der Befehl "Fahre näher auf", "Vergrößere den Abstand" (oder vergleichbares) erkannt wird. Bei Betätigung der Taste setzt der Controller 4 den aktuellen Abstand (also den aktuellen Abstandswert) als neuen, nutzerspezifischen Abstandszielwert.

So kann der Fahrer des Kraftfahrzeugs 1, während das Kraftfahrzeug 1 vom Controller 4 hinter einem Fahrzeug geführt wird, also die sogenannte Abstandsregelung aktiv ist (d. h. während der Folgefahrt), das Gaspedal 12 treten, bis er seinen Wunsch-Abstandswert erreicht hat und anschließend die Taste des Multifunktionslenkrads 8 betätigen.

Ebenfalls kann der Fahrer aber auch den Sprachbefehl "halte mehr Abstand" oder "halte weniger Abstand" abgeben, woraufhin der Controller 4 den bisherigen Abstandszielwert um 0,1 Sekunden erhöht bzw. erniedrigt und den resultierenden Wert als neuen, nutzerspezifischen Abstandszielwert setzt.

Außerdem ist der Controller 4 dazu eingerichtet, auf eine Betätigung einer Bremse (also des Bremspedals 14) des Kraftfahrzeugs 1 hin den Automatikmodus zu beenden. Zusätzlich ist der Controller 4 aber dazu eingerichtet ist, während einer Folgefahrt bei Betätigung des Bremspedals 14 durch den Fahrer den Automatikmodus für einen vorgegebenen Zeitraum (bspw. für 5 bis 10 Sekunden) beizubehalten, sofern die aufgrund der Betätigung der Bremse aufgebrachte Bremskraft einen vorgegebenen Schwellwert nicht überschreitet. Mithin prüft der Controller 4, ob nur eine geringfügige Bremsung, die nur zum Anpassen der aktuellen Geschwindigkeit dient, vorliegt. Bspw. ist hierfür in dem Controller 4 ein selbstlernender Algorithmus implementiert. Optional ist der Schwellwert dabei abhängig vom Istwert der Fahrgeschwindigkeit vorgegeben. Bei einer zu starken Bremsung, bei der die Bremskraft den Schwellwert überschreitet, schaltet der Controller 4 den Automatikmodus ab.

Wenn der Fahrer nach einer solchen "leichten" Betätigung der Bremse anschließend die Taste betätigt oder einen entsprechenden Sprachbefehl abgibt, setzt der Controller 4 den aktuellen Abstandswert als neuen Abstandszielwert.

Als Betätigung der Taste fasst der Controller 4 dabei vorzugsweise nur eine "einfache" (insbesondere eine kurze, unterhalb von 0,5 Sekunden andauernde) Betätigung auf. Andere Betätigungen der Taste verwirft der Controller 4.

Unterbleibt bis zum Ablauf des vorgegebenen Zeitraums die Betätigung des Mikrofons 6 oder der Taste, ist der Controller 4 dazu eingerichtet, den Automatikmodus zu beenden.

Der Controller 4 ist ferner dazu eingerichtet, diese vom Fahrer während der Folgefahrt initiierte Veränderung des Abstandszielwerts nur temporär, konkret nur für die aktuelle Fahrsituation zu übernehmen. Der Controller 4 ist dabei dazu eingerichtet, eine aktuelle Fahrsituation - bspw. Folgefahrt in einer Autobahnbaustelle - sowie deren Ende zu erkennen. Das Ende der Fahrsituation erkennt der Controller 4 im vorliegenden Beispiel daran, dass aus der Autobahnbaustelle ausgefahren wird. In diesem Fall wechselt der Controller 4 auf den vorhergehenden Abstandszielwert zurück.

Das Kraftfahrzeug 1 umfasst weiterhin eine nicht näher dargestellte Anzeigevorrichtung, bspw. eine klassische Instrumententafel oder einen Bildschirm, auf der Fahrinformationen wie z. B. der aktuelle Istwert der Fahrgeschwindigkeit und dergleichen angezeigt werden. Der Controller 4 ist dabei dazu eingerichtet, den Zielwert - beim Start des Automatikmodus oder bei Anpassung des Zielwerts - nur für einen vorgegebenen Zeitraum von etwa 3 Sekunden anzuzeigen.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### BEZUGSZEICHENLISTE:

- 1: Kraftfahrzeug
- 2: Fahrerassistenzsystem
- 4: Controller
- 6: Mikrofon
- 8: Multifunktionslenkrad
- 10: Radarsystem
- 12: Gaspedal
- 14: Bremspedal

## Patentansprüche

1. Fahrerassistenzsystem (2) für ein Kraftfahrzeug (1),
- mit einem Abstandsmesssystem (10) zur Bestimmung eines Abstands zu einem vorausfahrenden Fahrzeug oder mit einer Schnittstelle, mittels derer im bestimmungsgemäßen Einbauzustand im Kraftfahrzeug (1) ein solches Abstandsmesssystem (10) des Kraftfahrzeugs (1) signalübertragungstechnisch verknüpft ist,
- mit einem Controller (4), der dazu eingerichtet ist, das Kraftfahrzeug (1) in einem Automatikmodus bei einem vorgegebenen Zielwert einer Fahrgeschwindigkeit zu halten, einen vorgegebenen Abstandszielwert eines Abstands zu dem vorausfahrenden Fahrzeug nicht zu unterschreiten, sowie in Abhängigkeit wenigstens einer sensorisch erfassten Umgebungsmessgröße situationsspezifisch einen neuen Abstandszielwert zu setzen,
wobei der Controller (4) dazu eingerichtet ist, im Automatikmodus auf eine Eingabe eines Fahrzeuginsassen hin einen neuen nutzerspezifischen Abstandszielwert zu übernehmen,
wobei der Controller (4) dazu eingerichtet ist, eine aktuelle Fahrsituation sowie
ein Ende der aktuellen Fahrsituation zu erkennen und
**dadurch gekennzeichnet, dass** der Controller (4) dazu eingerichtet ist, während einer Folgefahrt den neuen Abstandszielwert nur für die Dauer der aktuellen Fahrsituation zu übernehmen, sowie bei Detektion des Endes der aktuellen Fahrsituation wieder den vor dem Wechsel auf den neuen Abstandszielwert gültigen Abstandszielwert als aktuellen Abstandszielwert zu übernehmen.

2. Fahrerassistenzsystem (2) nach Anspruch 1,
wobei der Controller (4) dazu eingerichtet ist, das Ende der aktuellen Fahrsituation anhand wenigstens eines Kriteriums ausgewählt aus wenigstens Wechsel des Straßentyps, Verlust des vorausfahrenden Fahrzeugs, Wechsel eines möglichen Fahrgeschwindigkeitsbereichs, Ende eines Telefonats, Ende des Fahrzyklus, Anmeldung eines anderen Fahrzeugführers zu erkennen.

3. Fahrerassistenzsystem (2) nach Anspruch 1 oder 2,
mit wenigstens einem mit dem Controller (4) signalübertragungstechnisch verknüpften Eingabewandler (6), wobei der Controller (4) dazu eingerichtet ist, auf Betätigung des Eingabewandlers (6) durch einen Fahrzeuginsassen den neuen Abstandszielwert zu übernehmen, und wobei es sich bei dem Eingabewandler um ein Mikrofon (6) zur Aufnahme eines Sprachbefehls des Fahrzeuginsassen handelt, und wobei der Controller (4) dazu eingerichtet ist, nur dann eine Betätigung des Mikrofons (6) zur Übernahme des neuen Abstandszielwerts heranzuziehen, wenn ein entsprechender Sprachbefehl erkannt wird und/oder wobei es sich bei dem Eingabewandler um einen Schalter oder um eine Taste zur manuellen Betätigung durch den Fahrzeuginsassen handelt.

4. Fahrerassistenzsystem (2) nach einem der Ansprüche 1 bis 3,
wobei der Controller (4) dazu eingerichtet ist, auf eine Betätigung einer Bremse des Kraftfahrzeugs (1) durch einen Fahrzeuginsassen hin den Automatikmodus zu beenden, und wobei der Controller (4) dazu eingerichtet ist, während einer Folgefahrt bei Betätigung der Bremse den Automatikmodus, insbesondere für einen vorgegebenen Zeitraum, beizubehalten, sofern die aufgrund der Betätigung der Bremse aufgebrachte Bremskraft und/oder bewirkte Verzögerung einen vorgegebenen Schwellwert nicht überschreitet.

5. Fahrerassistenzsystem (2) nach einem der Ansprüche 1 bis 4,
wobei der Controller (4) dazu eingerichtet ist, während einer Folgefahrt bei Beschleunigung durch den Fahrzeuginsassen den Abstandszielwert zu unterschreiten.

6. Fahrerassistenzsystem (2) nach Anspruch 4 oder 5,
wobei der Controller (4) dazu eingerichtet ist, bei Wegfall der Betätigung der Bremse, bei Wegfall der Beschleunigung durch den Fahrzeuginsassen oder Wegfall der Betätigung des Gaspedals des Kraftfahrzeugs (1) durch den Fahrzeuginsassen den aktuellen Abstandswert als neuen Abstandszielwert zu übernehmen.

7. Fahrerassistenzsystem (2) nach Anspruch 3 sowie 4 oder 5,
wobei der Controller (4) dazu eingerichtet ist, auf Betätigung des Eingabewandlers (6) den aktuellen Abstandswert als neuen Abstandszielwert zu übernehmen.

8. Fahrerassistenzsystem (2) nach einem der Ansprüche 1 bis 7,
wobei der Controller (4) dazu eingerichtet ist, beim Start des Automatikmodus den Abstandszielwert und/oder im Automatikmodus eine Veränderung des Abstandszielwerts nur für einen vorgegebenen Zeitraum, insbesondere nur für 2 bis 6 Sekunden, vorzugsweise nur für etwa 3 Sekunden, anzuzeigen.

9. Fahrerassistenzsystem (2) nach einem der Ansprüche 1 bis 8,
wobei der Controller (4) dazu eingerichtet ist, eine mittels des Eingabewandlers (6) oder eines weiteren Eingabewandlers seitens des Fahrzeuginsassen getätigte Eingabe zur dauerhaften Veränderung des Abstandszielwerts heranzuziehen.

10. Kraftfahrzeug (1) mit einem Fahrerassistenzsystem (2) nach einem der Ansprüche 1 bis 9.

## Claims

1. Driver assistance system (2) for a motor vehicle (1),
- with a distance measuring system (10) for determining a distance from a vehicle in front or with an interface by means of which such a distance measuring system (10) of the motor vehicle (1) is linked by signal transmission in the intended installation state in the motor vehicle (1),
- with a controller (4), which is configured to keep the motor vehicle (1) in an automatic mode at a specified target value of a vehicle speed, to not fall below a specified target distance value of a distance from the vehicle in front, and to set a new target distance value in a situation-specific manner as a function of at least one sensor-detected environmental measurement variable,
wherein the controller (4) is configured to adopt a new user-specific target distance value in the automatic mode in response to an input from an occupant of the vehicle,
wherein the controller (4) is configured to identify a current driving situation and an end of the current driving situation and
**characterized in that** the controller (4) is configured to adopt the new target distance value during a subsequent journey only for the duration of the current driving situation and when the end of the current driving situation is detected to adopt the target distance value valid before the change to the new target distance value again as the current target distance value.

2. Driver assistance system (2) according to claim 1,
wherein the controller (4) is configured to identify the end of the current driving situation on the basis of at least one criterion selected from at least a change of road type, loss of the vehicle in front, change of a possible driving speed range, end of a phone call, end of the driving cycle, registration of a different vehicle driver.

3. Driver assistance system (2) according to claim 1 or 2,
with at least one input transducer (6) which is linked to the controller (4) by signal transmission, wherein the controller (4) is configured to adopt the new target distance value when the input transducer (6) is actuated by an occupant of the vehicle, and wherein the input transducer is a microphone (6) for receiving a voice command from the occupant of the vehicle, and wherein the controller (4) is configured to use an actuation of the microphone (6) to adopt the new target distance value only if a corresponding voice command is identified and/or wherein the input transducer is a switch or a button for manual actuation by the occupant of the vehicle.

4. Driver assistance system (2) according to any one of claims 1 to 3,
wherein the controller (4) is configured to terminate the automatic mode in response to an actuation of a brake of the motor vehicle (1) by an occupant of a vehicle, and wherein the controller (4) is configured to maintain the automatic mode, in particular for a predetermined period of time, during a subsequent journey when the brake is actuated, provided that the braking force applied and/or deceleration caused as a result of the actuation of the brake does not exceed a predetermined threshold value.

5. Driver assistance system (2) according to any one of claims 1 to 4,
wherein the controller (4) is configured to fall below the target distance value during a subsequent journey when the occupant of the vehicle accelerates.

6. Driver assistance system (2) according to claim 4 or 5,
wherein the controller (4) is configured to adopt the current distance value as the new target distance value when the brake is no longer actuated, when acceleration by the occupant of the vehicle ceases or when the accelerator pedal of the motor vehicle (1) is no longer actuated by the occupant of the vehicle.

7. Driver assistance system (2) according to claim 3 and 4 or 5,
wherein the controller (4) is configured to adopt the current distance value as the new target distance value on actuation of the input transducer (6).

8. Driver assistance system (2) according to any one of claims 1 to 7,
wherein the controller (4) is configured to display the target distance value at the start of the automatic mode and/or a change in the target distance value in automatic mode only for a predetermined period of time, in particular only for 2 to 6 seconds, preferably only for about 3 seconds.

9. Driver assistance system (2) according to any one of claims 1 to 8,
wherein the controller (4) is configured to use an input made by the occupant of the vehicle by means of the input transducer (6) or a further input transducer to permanently change the target distance value.

10. Motor vehicle (1) with a driver assistance system (2) according to any one of claims 1 to 9.

## Revendications

1. Système d'aide à la conduite (2) pour un véhicule à moteur (1),
- avec un système de mesure de distance (10) pour la détermination d'une distance par rapport à un véhicule qui précède ou avec une interface au moyen de laquelle un tel système de mesure de distance (10) du véhicule à moteur (1) est lié par transmission de signaux dans l'état d'installation conforme dans le véhicule à moteur (1),
- avec un dispositif de commande (4) qui est conçu afin de maintenir le véhicule à moteur (1) dans un mode automatique à une valeur cible prédéfinie d'une vitesse de déplacement, de ne pas descendre en dessous d'une valeur cible de distance prédéfinie d'une distance par rapport au véhicule qui précède, ainsi que de définir une nouvelle valeur cible de distance en fonction d'au moins une grandeur de mesure d'environnement détectée par capteur de manière spécifique à la situation,
dans lequel le dispositif de commande (4) est conçu afin d'adopter une nouvelle valeur cible de distance spécifique à l'utilisateur dans le mode automatique lors d'une saisie d'un occupant du véhicule,
dans lequel le dispositif de commande (4) est conçu afin de reconnaître une situation de déplacement actuelle ainsi qu'une fin de la situation de déplacement actuelle et
**caractérisé en ce que** le dispositif de commande (4) est conçu afin d'adopter pendant un déplacement suivant la nouvelle valeur cible de distance uniquement pour la durée de la situation de déplacement actuelle, ainsi que d'adopter de nouveau la valeur cible de distance valide lorsque la fin de la situation de déplacement actuelle est détectée avant le passage à la nouvelle valeur cible de distance comme valeur cible de distance actuelle.

2. Système d'aide à la conduite (2) selon la revendication 1,
dans lequel le dispositif de commande (4) est conçu afin de reconnaître la fin de la situation de déplacement actuelle à l'aide d'au moins un critère sélectionné à partir d'au moins un changement de type de route, une perte du véhicule qui précède, un changement de plage de vitesse de déplacement possible, une fin de conversation téléphonique, une fin de cycle de déplacement, un enregistrement d'un autre conducteur du véhicule.

3. Système d'aide à la conduite (2) selon la revendication 1 ou 2,
avec au moins un convertisseur de saisie (6) lié au dispositif de commande (4) par la transmission de signaux, dans lequel le dispositif de commande (4) est conçu afin d'adopter la nouvelle valeur cible de distance lorsque le convertisseur de saisie (6) est actionné par un occupant du véhicule, et dans lequel le convertisseur de saisie est un microphone (6) pour la réception d'une commande vocale de l'occupant du véhicule, et dans lequel le dispositif de commande (4) est conçu afin d'utiliser uniquement un actionnement du microphone (6) pour l'adoption de la nouvelle valeur cible de distance lorsqu'une commande vocale correspondante est reconnue et/ou dans lequel le convertisseur de saisie est un commutateur ou une touche pour l'actionnement manuel par l'occupant du véhicule.

4. Système d'aide à la conduite (2) selon l'une quelconque des revendications 1 à 3,
dans lequel le dispositif de commande (4) est conçu afin de mettre fin au mode automatique lorsqu'un frein du véhicule à moteur (1) est actionné par un occupant du véhicule, et dans lequel le dispositif de commande (4) est conçu afin de conserver le mode automatique pendant un déplacement suivant lorsque le frein est actionné, en particulier pour une période prédéfinie, à condition que la force de freinage appliquée et/ou la décélération provoquée lorsque le frein est actionné reste en dessous d'une valeur seuil prédéfinie.

5. Système d'aide à la conduite (2) selon l'une quelconque des revendications 1 à 4,
dans lequel le dispositif de commande (4) est conçu afin de rester en dessous de la valeur cible de distance pendant un déplacement suivant lorsque l'occupant du véhicule accélère.

6. Système d'aide à la conduite (2) selon la revendication 4 ou 5,
dans lequel le dispositif de commande (4) est conçu afin d'adopter la valeur de distance actuelle comme nouvelle valeur cible de distance lorsque le frein n'est plus actionné, lorsque l'occupant du véhicule cesse l'accélération ou lorsque la pédale d'accélération du véhicule à moteur (1) n'est plus actionnée par l'occupant du véhicule.

7. Système d'aide à la conduite (2) selon la revendication 3 ainsi que 4 ou 5,
dans lequel le dispositif de commande (4) est conçu afin d'adopter la valeur de distance actuelle comme nouvelle valeur cible de distance lorsque le convertisseur de saisie (6) est actionné.

8. Système d'aide à la conduite (2) selon l'une quelconque des revendications 1 à 7,
dans lequel le dispositif de commande (4) est conçu afin d'afficher la valeur cible de distance lors du démarrage du mode automatique et/ou une modification de la valeur cible de distance en mode automatique uniquement pendant une période prédéfinie, en particulier uniquement pendant 2 à 6 secondes, de préférence uniquement pendant environ 3 secondes.

9. Système d'aide à la conduite (2) selon l'une quelconque des revendications 1 à 8,
dans lequel le dispositif de commande (4) est conçu afin d'utiliser une saisie effectuée par l'occupant du véhicule au moyen du convertisseur de saisie (6) ou d'un autre convertisseur de saisie pour la modification durable de la valeur cible de distance.

10. Véhicule à moteur (1) avec un système d'aide à la conduite (2) selon l'une quelconque des revendications 1 à 9.
